# FASCICULE DE BREVET EUROPEEN

(11) **EP 3 063 418 B1**
(45) Date de publication et mention de la délivrance du brevet: **07.10.2020**
(21) Numéro de dépôt: 14805993.4
(22) Date de dépôt: 30.10.2014
(51) Int. Cl.: F16B 21/18, F16B 43/00

(54) **ENSEMBLE DE LIAISON PAR ANNEAU D'ARRÊT POUR TRONÇON D'ARBRE. PROCÉDÉ DE MONTAGE D'UN TEL ENSEMBLE DE LIAISON**
VERBINDUNGSANORDNUNG MIT EINEM HALTERING FÜR EINE WELLE VERFAHREN ZUR MONTAGE SOLCH EINER VERBINDUNGSANORDNUNG
CONNECTING ASSEMBLY USING A STOP RING FOR A LENGTH OF SHAFT. METHOD OF MOUNTING SUCH A CONNECTING ASSEMBLY

(30) Priorité: 30.10.2013 FR 1360609
(43) Date de publication de la demande: 07.09.2016
(73) Titulaire: Poclain Hydraulics Industrie, 60410 Verberie (FR)
(72) Inventeur: MULOT, Jérémie, F-60510 Le Fay Saint Quentin (FR); BONNOMET, Bertrand, F-60610 Lacroix Saint Ouen (FR); VIDAL, Stephane, F-60126 Longueil Sainte Marie (FR)
(74) Mandataire: Cabinet Beau de Loménie
(86) Numéro de dépôt international: PCT/FR2014/052763
(87) Numéro de publication internationale: WO 2015/063423

(56) Documents cités:
- EP-A1- 0 239 556
- EP-A1- 1 400 710
- EP-A2- 2 743 525
- AT-B- 236 709
- DE-B1- 2 236 179
- JP-U- S5 218 376
- JP-U- S6 266 011
- US-A- 1 638 209
- US-A- 2 036 152
- US-A- 2 713 806
- US-A- 3 179 450
- US-A1- 2004 208 729
- US-A1- 2006 182 518

## Description

L'invention concerne un ensemble de liaison comportant essentiellement une pièce d'accueil, un anneau d'arrêt constitué principalement par deux demi-anneaux, et un tronçon d'arbre prévu pour être placé dans un alésage de la pièce d'accueil. L'invention concerne également un procédé de montage d'un tel ensemble de liaison.

Dans un tel ensemble de liaison, l'anneau d'arrêt a pour fonction de solidariser axialement le tronçon d'arbre par rapport à la pièce d'accueil, c'est-à-dire, d'empêcher leurs mouvements relatifs suivant la direction de l'axe du tronçon d'arbre (Dans le présent document, le terme 'axial' fait référence à la direction de l'axe du tronçon d'arbre).

Pour assurer cette solidarisation axiale, l'anneau d'arrêt est placé autour du tronçon d'arbre dans une position dite 'position montée' ; il est alors bloqué axialement sur le tronçon d'arbre grâce à une pluralité de butées axiales contre lesquelles l'anneau est placé. Il suffit que l'anneau d'arrêt soit bloqué axialement dans une direction suivant l'axe du tronçon d'arbre. Cependant, de préférence l'anneau d'arrêt est bloqué par les butées axiales sur le tronçon d'arbre dans les deux directions.

La pièce d'accueil comprend de manière similaire une ou plusieurs butées axiales aptes à solidariser axialement l'anneau par rapport à la pièce d'accueil, c'est-à-dire permettant d'empêcher un mouvement relatif de celui-ci au moins dans une direction suivant l'axe du tronçon d'arbre, par rapport à la pièce d'accueil.

Les butées axiales du tronçon d'arbre peuvent définir ou délimiter à la surface de celui-ci une gorge, éventuellement discontinue, dans laquelle l'anneau est placé. Dans ce cas, les parois latérales de la gorge constituent les butées axiales au sens indiqué précédemment. Cependant, il n'est pas nécessaire que l'anneau soit maintenu latéralement de manière continue. Il suffit qu'il existe un certain nombre de butées axiales, situées de part et d'autre de l'anneau, pour maintenir celui-ci axialement.

L'utilisation d'un anneau d'arrêt pour solidariser axialement un arbre et une pièce d'accueil dans laquelle il est engagé est une technique connue en soi.

En général, les anneaux d'arrêts sont constitués d'un anneau élastique que l'on enfile sur un arbre en l'écartant avec des pinces par déformation élastique, puis on relâche l'anneau qui se place dans une gorge. L'anneau tient en place de lui-même.

Pour le cas particulier de très forts efforts axiaux, ce qui est souvent le cas des moteurs hydrauliques, l'anneau doit être très massif et épais, on ne peut plus le déformer élastiquement, et il n'est plus possible de le poser avec des pinces. On préfère donc utiliser deux demi anneaux. Un tel anneau d'arrêt est par exemple divulgué par le document US2,036,152, ou encore par le document JP S62 66011 U.

Lors du montage de la pièce d'accueil sur le tronçon d'arbre, on dispose généralement le tronçon d'arbre suivant la direction verticale. On place alors les deux demi-anneaux dans la gorge (c'est-à-dire entre les butées axiales) prévue sur le tronçon d'arbre pour les recevoir.

Comme le tronçon d'arbre est orienté dans la direction verticale, chacun des demi-anneaux repose de manière stable sur celui-ci. Le montage de la pièce d'accueil sur le tronçon d'arbre peut donc se dérouler sans difficulté.

Cependant, le montage de la pièce d'accueil sur le tronçon d'arbre est plus difficile lorsque le tronçon d'arbre est orienté suivant une direction horizontale. Ce cas survient notamment lorsque le tronçon d'arbre est une fusée de roue : dans ce cas en effet, il n'est pas possible d'orienter le tronçon d'arbre dans la direction verticale, et le montage doit être réalisé alors que le tronçon d'arbre est horizontal.

Or dans cette configuration, lorsque les demi-anneaux sont placés dans la gorge du tronçon d'arbre, au moins l'un des deux a tendance à tomber.

Habituellement, pour remédier à ce problème on utilise divers artifices pour maintenir en place les demi anneaux pendant la phase montée : on maintient ceux-ci avec de la colle ou de la graisse ; ou on prévoit une gorge légèrement plus étroite que les demi-anneaux, ce qui permet de coincer ceux-ci en position pendant la phase montée. Mais ces solutions ne sont guère pratiques.

Il existe donc un besoin pour un ensemble de liaison comportant une pièce d'accueil, un tronçon d'arbre et un anneau d'arrêt associés, et dans lequel la pièce d'accueil puisse être montée de manière simple, sans nécessiter le collage de l'anneau d'arrêt sur le tronçon d'arbre.

Par ailleurs, lorsque l'anneau d'arrêt est composé de deux demi-anneaux et qu'il est mis en rotation ses demi-anneaux sont soumis à des forces centrifuges.

D'autre part, même dans les cas où inversement l'anneau est monté sur un tronçon d'arbre non rotatif, comme par exemple une fusée de roue non rotative, même en l'absence de force centrifuge, il peut être indispensable que les demi anneaux ne puissent se déplacer sous l'effet des chocs ou des vibrations pendant l'exploitation.

Aussi, afin de maintenir la position relative des deux demi-anneaux l'un par rapport à l'autre, de manière connue l'anneau peut comporter des moyens de retenue servant à maintenir les deux demi-anneaux en position relative fixe l'un par rapport à l'autre. De tels moyens de retenue sont par exemple proposés par le document US2,036,152 précédemment cité.

Comme ces moyens de retenue sont indispensables pour assurer le maintien en position de l'anneau pendant toute la durée d'exploitation, ils doivent être dimensionnés de manière à avoir une fiabilité très élevée, analogue à celle des demi-anneaux. Il s'ensuit un coût non négligeable pour assurer cette fonction de maintien en position de l'anneau durant l'exploitation.

Un premier objectif de l'invention est de remédier aux inconvénients indiqués précédemment et de proposer un ensemble de liaison tel que présenté en introduction, dont le montage soit plus simple que les ensembles de liaison antérieurs.

Un deuxième objectif de l'invention est de proposer un ensemble de liaison tel que présenté en introduction, comportant des moyens de retenue servant à maintenir les deux demi-anneaux en position durant la phase d'exploitation, permettant une phase de montage facile, et de coût inférieur aux ensembles de liaison connus.

Dans ce but selon l'invention, il est proposé un ensemble de liaison comprenant une pièce d'accueil, un anneau d'arrêt, et un tronçon d'arbre présentant une pluralité de butées axiales aptes à empêcher un déplacement axial de l'anneau lorsque celui-ci est disposé autour dudit tronçon ; la pièce d'accueil présentant un alésage pour recevoir le tronçon d'arbre ;
l'anneau étant constitué principalement par deux demi-anneaux déplaçables l'un par rapport à l'autre, chaque demi-anneau présentant une première extrémité et une deuxième extrémité ;
l'ensemble de liaison comportant des moyens de retenue aptes, lorsque l'anneau est placé dans une position montée autour dudit tronçon et retenu axialement par lesdites butées axiales, à empêcher la première extrémité d'un premier desdits demi-anneaux et la première extrémité du deuxième desdits demi-anneaux de s'écarter l'une de l'autre suivant une direction circonférentielle ;
l'anneau empêchant en position montée un déplacement relatif suivant une direction axiale du tronçon d'arbre par rapport à la pièce d'accueil.

L'ensemble de liaison est de plus agencé de telle sorte qu'en position montée, l'anneau est interposé entre le tronçon d'arbre et la pièce d'accueil et est maintenu radialement contre le tronçon d'arbre par la pièce d'accueil ; en outre, les moyens de retenue sont agencés pour le maintien des premières extrémités des demi-anneaux, tandis que les deuxièmes extrémités sont libres.

La direction circonférentielle considérée ici est la direction circonférentielle sur la circonférence du tronçon d'arbre, entre les premières extrémités des demi-anneaux ou au niveau de celles-ci.

Dans certains modes de réalisation, lors du montage des demi-anneaux sur le tronçon d'arbre, si celui-ci est orienté suivant une direction horizontale, les demi-anneaux peuvent être disposés de part et d'autre du tronçon d'arbre, de telle sorte que leurs premières extrémités réunies constituent le point haut de l'anneau placé en position montée sur l'arbre.

Dans cette position, grâce aux moyens de retenue empêchant les deux premières extrémités des demi-anneaux de s'écarter suivant la direction circonférentielle, les deux demi-anneaux se soutiennent mutuellement (plutôt que de tomber de part et d'autre du tronçon d'arbre), si bien que l'anneau reste en position montée sur le tronçon d'arbre. Le montage de la pièce d'accueil peut donc alors être réalisé sans difficultés.

De plus grâce à l'invention, les demi-anneaux peuvent être montés sans serrage entre les butées axiales du tronçon d'arbre. Avantageusement, cela évite qu'ils ne soient montés sur le tronçon d'arbre de manière trop rigide, ou qu'ils soient soumis inutilement à des contraintes. Cela facilite également le montage.

Ainsi dans un mode de réalisation, les demi-anneaux sont montés entre les butées axiales avec un jeu axial par rapport à celles-ci.

Cependant ils peuvent également être montés avec un léger serrage entre les butées axiales.

Les demi-anneaux s'étendent habituellement sur 360° autour de l'arbre. Ils peuvent cependant éventuellement s'étendre sur une plage angulaire strictement inférieure à 360°, par exemple 330°.

Les butées axiales peuvent être formées de manière intégrale (monobloc) avec le tronçon d'arbre. Cependant, elles peuvent également être formées par des pièces distinctes du tronçon d'arbre, et fixées ou rapportées sur celui-ci.

Chaque butée axiale doit avoir une liaison avec le tronçon d'arbre qui au moins empêche la butée axiale de se déplacer par rapport au tronçon d'arbre dans le sens qui augmenterait la possibilité de déplacement axial de l'anneau sur le tronçon d'arbre. Cela dit, en général chaque butée axiale est rigidement fixée au tronçon d'arbre.

La pièce d'accueil peut notamment être un bloc-cylindres de moteur hydraulique, notamment un moteur hydraulique à pistons radiaux.

Le tronçon d'arbre peut être un tronçon d'arbre de sortie de moteur et/ou une fusée de roue.

De nombreux modes de réalisation sont envisageables pour les moyens de retenue.

Dans un mode de réalisation non couvert par les revendications annexées, les moyens de retenue comportent un bracelet élastique apte à coopérer avec les demi-anneaux de manière à maintenir ceux-ci au contact du tronçon d'arbre, en position montée. Grâce à ce bracelet, les deux demi-anneaux sont maintenus dans une position fixe au contact de la surface extérieure du tronçon d'arbre, entre les butées axiales. Par suite, leurs premières extrémités sont empêchées de s'écarter.

Dans un mode de réalisation, les premières extrémités des demi-anneaux peuvent comporter une partie coudée qui s'étend suivant une direction radiale. Cette partie coudée peut également s'étendre suivant une direction parallèle à un axe de l'arbre.

Ces parties coudées forment des crochets qui coopèrent l'un avec l'autre, directement ou indirectement, pour empêcher les premières extrémités des demi-anneaux de s'écarter.

Dans un mode de réalisation, les moyens de retenue comportent une pièce de retenue fixée rigidement à l'un des demi-anneaux. Dans le cas où les premières extrémités des demi-anneaux comportent une partie coudée, au moins l'une de ces parties coudées peut être constituée par cette pièce de retenue.

Inversement, dans un mode de réalisation les moyens de retenue sont constitués d'une part par une partie intégrale d'un premier desdits demi-anneaux, et d'autre part par une partie intégrale de l'autre desdits demi-anneaux. L'expression 'partie intégrale' signifie ici que la portion considérée des moyens de retenue est formée de manière intégrale, ou monobloc, avec le demi-anneau considéré.

Dans un mode de réalisation, les moyens de retenue sont agencés de telle sorte que tout déplacement relatif des premières extrémités des demi-anneaux, depuis la position montée jusqu'à une position dans laquelle l'écartement desdites premières extrémités suivant la direction circonférentielle est possible, comporte ou implique un déplacement radial d'au moins une des premières extrémités.

Cela peut être réalisé par exemple en agençant les butées axiales du tronçon d'arbre de manière à empêcher tout écartement axial des premières extrémités.

Ainsi, pour que les premières extrémités s'écartent l'une de l'autre, au moins l'une d'elles doit d'abord se déplacer radialement (dans le sens centrifuge, en s'écartant du tronçon d'arbre).

Or, lorsque le tronçon d'arbre est orienté horizontalement avec les premières extrémités placées sur la méridienne supérieure, ce déplacement radial centrifuge se produit vers le haut. Ce déplacement nécessite donc que la première extrémité de demi-anneau considérée se soulève, c'est-à-dire se déplace vers le haut. Ce déplacement est donc empêché par la gravité.

Par suite dans ce mode de réalisation, grâce la gravité, avantageusement chacune des premières extrémités est empêchée de se désengager et/ou de s'écarter de la première extrémité de l'autre demi-anneau.

Plus précisément en position montée, du fait de la position des centres de gravité des demi-anneaux par rapport au tronçon d'arbre, la première extrémité de chacun des demi-anneaux se plaque contre le tronçon d'arbre : position dans laquelle les premières extrémités des demi-anneaux sont empêchées de s'écarter l'une de l'autre.

Dans un mode de réalisation, la première extrémité de chacun des demi-anneaux comporte une surface de retenue dont la perpendiculaire sortante est dirigée vers l'arrière par rapport à la direction de la première extrémité du demi-anneau ; les surfaces de retenue des deux demi-anneaux sont agencées de manière à pouvoir être placées dans une position d'engagement l'une avec l'autre, dans laquelle i'écartement des premières extrémités des demi-anneaux est empêché.

Chacune des surfaces de retenue forme ainsi une sorte de crochet, ou encore agit comme un crochet, et coopère directement ou indirectement avec l'autre surface de retenue pour empêcher les deux premières extrémités des deux demi-anneaux de s'écarter suivant la direction circonférentielle (du tronçon d'arbre).

L'orientation des surfaces de retenue, dont les perpendiculaires sortantes sont orientées vers l'arrière par rapport à la direction des premières extrémités des demi-anneaux, permet que la fonction anti-écartement des moyens de retenue soit réalisée sans recours à des moyens de retenue compliqués comme le collage.

Dans un mode de réalisation, les surfaces de retenue sont aptes à être engagées directement l'une avec l'autre de manière à empêcher lesdites premières extrémités de s'écarter l'une de l'autre suivant la direction circonférentielle, ou bien à les maintenir à une distance constante l'une de l'autre, lorsque l'anneau est en position montée. Le terme 'directement' signifie que les surfaces de retenue sont alors en contact l'une avec l'autre.

Dans un mode de réalisation, au moins l'un des demi-anneaux comporte un creux suivant une direction sensiblement perpendiculaire à la direction circonférentielle ; les moyens de retenue comportent au moins une saillie apte à être placée dans ledit creux, et la saillie est solidaire de l'autre demi-anneau quant aux déplacements suivant la direction circonférentielle.

On comprend que le creux a une forme qui permet de retenir la saillie et d'empêcher celle-ci de se déplacer suivant la direction circonférentielle du tronçon d'arbre, au moins dans le sens qui permet l'écartement des deux premières extrémités des demi-anneaux, suivant la direction circonférentielle. Par suite, l'engagement de la saillie dans le creux empêche l'écartement relatif des premières extrémités des deux demi-anneaux.

Le creux peut avoir différentes formes : il peut être un trou cylindrique (de préférence, mais pas nécessairement, d'axe s'étendant dans un plan perpendiculaire à la direction circonférentielle ; un axe orienté suivant la direction circonférentielle peut même convenir), la saillie ayant alors une forme lui permettant d'être engagée dans le trou cylindrique.

Le creux peut également être semi-cylindrique (le plan du demi-cylindre étant un plan méridien) ou hémisphérique, et la saillie a une forme permettant d'être engagée dans ledit trou, et les premières extrémités sont empêchées de s'écarter l'une de l'autre suivant une direction perpendiculaire à la direction d'engagement de la saillie dans ledit creux.

Plus généralement toutes les formes aménagées sur les premières extrémités respectives des deux demi-anneaux, et qui sont aptes à coopérer l'une avec l'autre pour empêcher l'écartement relatif, suivant la direction circonférentielle, des premières extrémités des demi-anneaux, peuvent être utilisées.

Dans un mode de réalisation, les moyens de retenue comportent une pièce de retenue déplaçable par rapport aux demi-anneaux ; et la pièce de retenue est apte à être placée au contact des surfaces de retenue de manière à transmettre un effort s'exerçant entre celles-ci et par suite à empêcher l'écartement desdites premières extrémités l'une par rapport à l'autre.

La pièce de retenue peut notamment être une goupille, un cylindre, une bille : Elle est en fait généralement un organe de cisaillement, c'est-à-dire une pièce transmettant des contraintes notamment de cisaillement d'une pièce à une autre, en l'occurrence, de l'un à l'autre des demi-anneaux.

Lorsque les moyens de retenue comportent une saillie placée dans un trou pour empêcher l'écartement des premières extrémités des demi-anneaux, la saillie indiquée précédemment peut être solidaire de l'un des demi-anneaux, et par exemple être formée de manière intégrale avec celui-ci.

Cependant, la saillie peut également faire partie d'une pièce de retenue telle qu'indiquée précédemment. Dans ce cas, la pièce de retenue doit être apte à être solidarisée au moins suivant la direction circonférentielle avec l'un des demi-anneaux (celui qui ne comporte pas le creux).

La pièce de retenue peut dans ce but par exemple comporter deux saillies, chacune des saillies étant prévue pour être placée dans un creux de l'un des demi-anneaux. La pièce de retenue peut par exemple être une goupille passant dans des trous du premier et du deuxième demi-anneau.

Dans un mode de réalisation, la pièce de retenue est le tronçon d'arbre lui-même.

Dans ce cas, le tronçon d'arbre peut présenter un ou deux trous, et les premières extrémités des demi-anneaux peuvent présenter des saillies aptes à être insérées dans le(s)dit(s) trou(s).

Il peut aussi être aménagé simplement avec deux surfaces de blocage, chacune de celles-ci servant à empêcher le déplacement l'une des premières extrémités des demi-anneaux suivant la direction circonférentielle dans le sens qui tend à faire s'écarter les premières extrémités des demi-anneaux.

Dans un mode de réalisation, les moyens de retenue comportent un aimant solidaire ou apte à être solidarisé avec l'un des demi-anneaux, et l'autre demi-anneau présente une extrémité ferromagnétique ou les moyens de retenue comportent une pièce ferromagnétique susceptible d'être fixée à l'extrémité de l'autre demi-anneau.

Dans un mode de réalisation, les deux demi-anneaux et le cas échéant la pièce de retenue sont aptes à être fixés les uns aux autres même en l'absence du tronçon d'arbre. La fixation peut se limiter à une fixation qui empêche les premières extrémités des deux demi-anneaux de s'écarter suivant la direction circonférentielle.

Dans un mode de réalisation, les moyens de retenue sont distincts ou indépendants du tronc d'arbre.

Dans un mode de réalisation, les deux demi-anneaux sont identiques ou symétriques.

Un troisième objectif de l'invention est de proposer un procédé de montage d'un ensemble de liaison du type présenté en introduction, qui soit simple, permette notamment d'éviter l'application de colle pour maintenir l'anneau sur le tronçon d'arbre, et qui nécessite un ensemble de maintien peu coûteux.

Cet objectif est atteint selon l'invention par un procédé de montage d'un ensemble de liaison tel que défini précédemment et comprenant les étapes suivantes :
a) on place les deux demi-anneaux sur le tronçon d'arbre, en mettant en œuvre les moyens de retenue de telle sorte que la première extrémité d'un premier desdits demi-anneaux et la première extrémité du deuxième desdits demi-anneaux ne puissent s'écarter l'une de l'autre suivant une direction circonférentielle, les deuxièmes extrémités desdits demi-anneaux restant libres ;
b) on engage la pièce d'accueil sur le tronçon d'arbre de telle sorte que le tronçon d'arbre soit disposé dans l'alésage de la pièce d'accueil, l'anneau étant interposé entre le tronçon d'arbre et la pièce d'accueil, et que la pièce d'accueil maintienne l'anneau radialement contre le tronçon d'arbre.

Avantageusement, dans le procédé de montage selon l'invention, le tronçon d'arbre peut être orienté horizontalement durant les étapes a) et b). Pendant ces étapes, les demi-anneaux sont maintenus en position grâce aux moyens de retenue.

Dans un mode préféré de mise en œuvre, lors de l'étape a) les premières extrémités des demi-anneaux sont disposées sur la méridienne supérieure du tronçon d'arbre. Cette disposition suffit pour que durant les étapes a) et b), les deux demi-anneaux restent en position sur le tronçon d'arbre, sans qu'il soit nécessaire de prévoir des moyens de maintien complémentaires.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- les figures 1A, 1B et 1C sont des vues schématiques en coupe des étapes d'un mode de mise en œuvre du procédé de montage d'un ensemble de liaison selon l'invention.
- la figure 2 est vue schématique en perspective d'un tronçon d'arbre de type connu.
- la figure 3 est une vue schématique en perspective d'un ensemble de liaison, dans un mode de réalisation qui ne correspond pas à l'invention revendiquée.
- la figure 4 est une vue schématique en perspective d'un ensemble de liaison, dans un deuxième mode de réalisation qui correspond à l'invention revendiquée.
- la figure 5 est une vue en perspective de l'anneau faisant partie de l'ensemble de liaison représenté sur la figure 4.
- la figure 6 est une vue schématique en perspective d'un ensemble de liaison dans un troisième mode de réalisation, qui ne correspond pas à l'invention revendiquée.
- la figure 7A est une vue en perspective de l'anneau faisant partie de l'ensemble de liaison représenté sur la figure 6.
- les figures 7B et 7C sont des vues schématiques d'un détail d'un anneau d'un ensemble de liaison similaire à l'anneau représenté sur la figure 7A.
- la figure 8 est une vue schématique en perspective d'un ensemble de liaison, dans un quatrième mode de réalisation qui correspond à l'invention revendiquée.
- la figure 9 est une vue en perspective de l'anneau faisant partie de l'ensemble de liaison représenté sur la figure 8
- la figure 10 est une vue schématique en perspective d'un ensemble de liaison, dans un cinquième mode de réalisation qui ne correspond pas à l'invention revendiquée.
- la figure 11 est une vue en perspective de l'anneau faisant partie de l'ensemble de liaison représenté sur la figure 10.
- la figure 12 est une vue schématique en perspective d'un ensemble de liaison, dans un sixième mode de réalisation qui correspond à l'invention revendiquée.
- la figure 13 est une vue en perspective de l'anneau faisant partie de l'ensemble de liaison représenté sur la figure 12.
- la figure 14 est une vue schématique en perspective, en coupe partielle, d'un ensemble de liaison, dans un septième mode de réalisation qui correspond à l'invention revendiquée.
- la figure 15 est vue schématique en perspective du tronçon d'arbre faisant partie de l'ensemble de liaison représenté sur la figure 14.
- la figure 16 est une vue en perspective de l'anneau faisant partie de l'ensemble de liaison représenté sur la figure 14.
- la figure 17 est une vue schématique en perspective d'un ensemble de liaison, dans un huitième mode de réalisation qui correspond à l'invention revendiquée.
- la figure 18 est une vue en perspective de l'anneau faisant partie de l'ensemble de liaison représenté sur la figure 17.
- la figure 19 est une vue schématique en perspective, en coupe partielle, d'un ensemble de liaison, dans un neuvième mode de réalisation qui ne correspond pas à l'invention revendiquée, représenté en éclaté.
- la figure 20 est une vue en perspective de l'anneau faisant partie de l'ensemble de liaison représenté sur la figure 19.

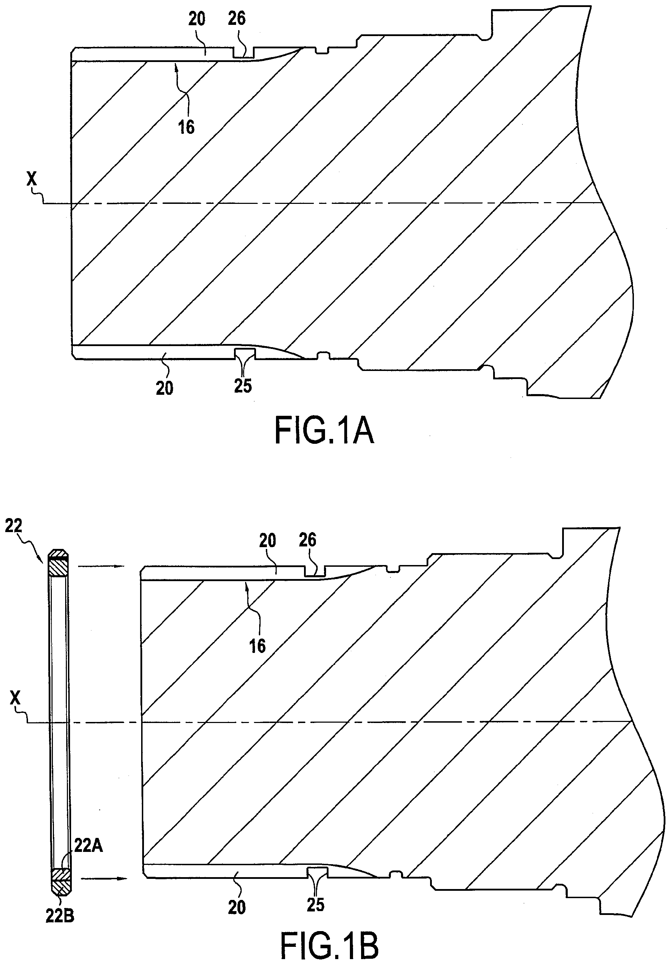

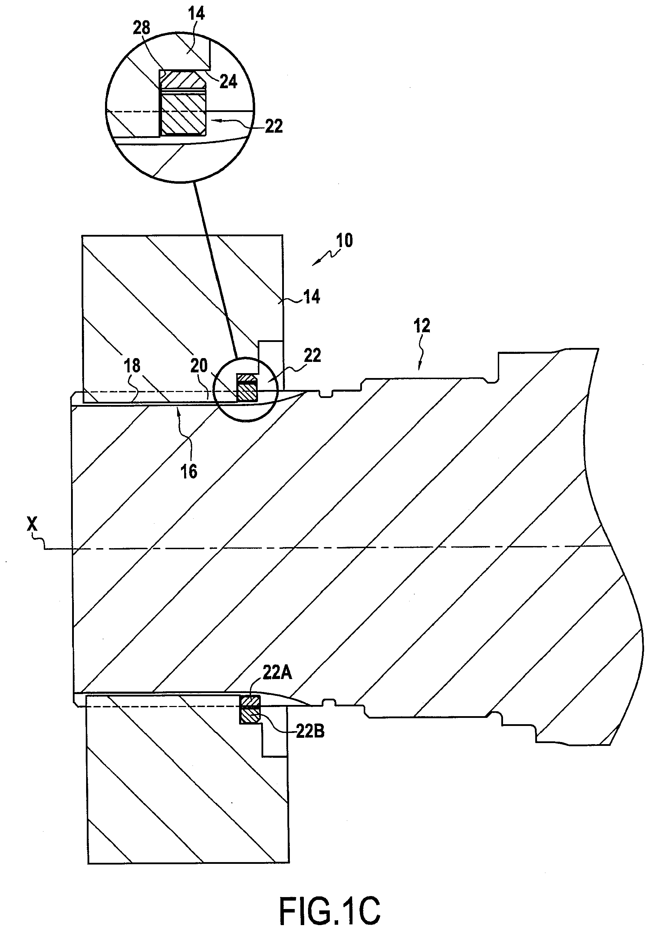

Différents modes de réalisation d'ensembles de liaison vont maintenant être présentés en relation avec les figures 1 à 20.

Dans les différents modes de réalisation, les éléments correspondants ou identiques portent un même signe de référence et ne sont décrits que pour le premier mode de réalisation dans lequel ils apparaissent.

La figure 1C est une vue partielle d'un moteur hydraulique 10 monté sur une fusée de roue 12. Cette fusée de roue fait partie d'un véhicule ou d'une machine non représenté(e).

Le moteur hydraulique 10 est un moteur hydraulique à pistons radiaux de type connu en soi. Il comporte notamment un bloc-cylindres 14 monté sur la fusée 12. La fusée 12 constitue un tronçon d'arbre au sens de l'invention.

Le bloc-cylindres 14 est traversé de part en part par un alésage 16, sur lequel sont usinées des cannelures longitudinales 18.

La surface extérieure de la fusée 12 est formée, quant à elle, avec des cannelures longitudinales 20.

Lorsque la fusée 12 est positionnée dans l'alésage 16, les cannelures 18 sont engagées avec les cannelures 20. Le bloc-cylindres 14 est alors solidarisé en grande partie avec la fusée 12 ; cependant, la coopération entre les cannelures 18 et 20 laisse libre un degré de liberté, à savoir celui qui concerne la translation relative du bloc-cylindres 14 par rapport à la fusée 12 suivant l'axe X de celle-ci.

Pour empêcher une telle translation et bloquer axialement le bloc-cylindres 14, un anneau d'arrêt 22 est prévu sur la fusée 12. L'ensemble comprenant le bloc-cylindres 14, la fusée 12 et l'anneau 22 constitue un ensemble de liaison, dont le bloc-cylindres 14 constitue la pièce d'accueil, au sens de l'invention.

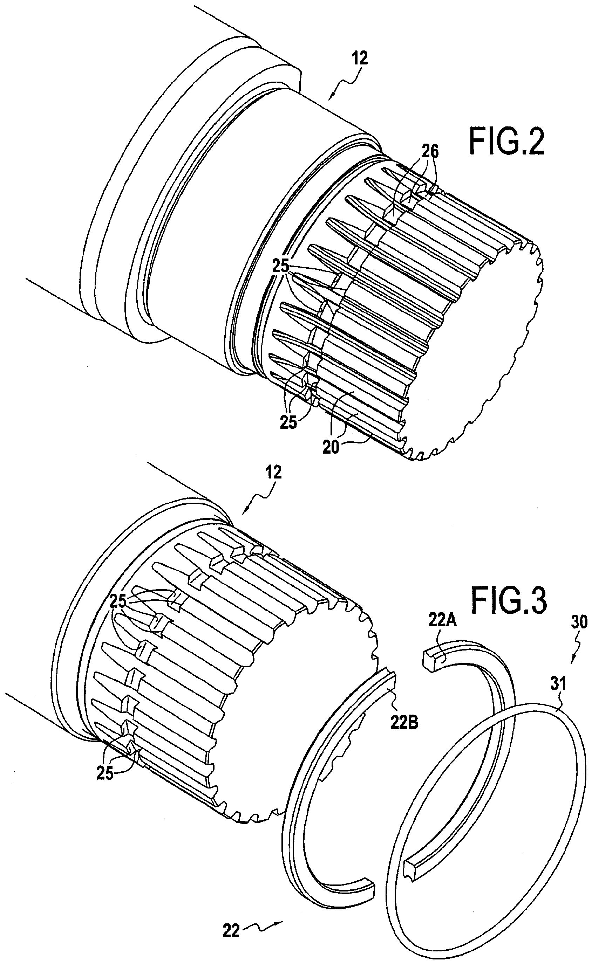

L'anneau 22 est bloqué axialement sur la fusée 12 dans les deux directions suivant l'axe X de la fusée. Dans ce but, chacune des cannelures 20 présente une encoche 26 (Fig.2). Chacune des encoches 26 s'étend axialement suivant l'axe X sur une distance très légèrement supérieure à l'épaisseur de l'anneau 22.

Les extrémités 25 des cannelures 20 au niveau des encoches 26 forment alors des butées axiales au sens de l'invention, qui empêchent l'anneau 22 de se déplacer axialement sur le tronçon d'arbre.

L'anneau 22 est constitué de deux demi-anneaux 22A et 22B qui seront détaillés par la suite.

La position montée de l'ensemble de liaison est illustrée par la figure 1C. Dans cette position, l'anneau 22 est interposé entre le tronçon d'arbre 12 et la pièce d'accueil 14.

Dans ce but, à l'extrémité de l'alésage 16 du bloc-cylindres 14 est formé un alésage 24 de plus grand diamètre que l'alésage 16. L'alésage 24 est prévu pour recevoir l'anneau 22 avec un jeu qui doit être strictement inférieur et de préférence nettement inférieur à l'épaisseur de l'anneau 22, c'est-à-dire à la différence de rayon entre sa face radialement intérieure et sa face radialement extérieure, ce qui empêche tout démontage de l'anneau 22 en fonctionnement. Cependant, pour un bon appui des pièces dans le sens axial, on préfère avoir un montage sensiblement sans jeu. L'alésage 24 présente alors un diamètre intérieur sensiblement égal au diamètre extérieur de l'anneau 22. D'autre part, du fait de la différence de diamètre entre l'alésage 16 et l'alésage 24, un épaulement 28 est formé dans le plan de séparation entre les alésages 16 et 24.

Comme on peut le voir sur la Fig.1C, en position montée l'anneau 22 est placé dans l'alésage 24. Aussi, il est maintenu radialement contre le tronçon d'arbre 12 par l'alésage 24 du bloc-cylindres 14 (en tant que pièce d'accueil). Ainsi en position montée, l'anneau 22 est empêché de s'écarter radialement par l'alésage 24.

L'alésage 24 doit recouvrir l'anneau 22 au moins en partie suivant la direction axiale. De préférence, il doit le recouvrir sensiblement sur toute son épaisseur (suivant la direction axiale). D'une manière particulièrement préférentielle, il doit le recouvrir complètement, et aller légèrement au-delà.

Pour faciliter le montage de la pièce d'accueil sur le tronçon d'arbre et l'anneau 22, l'alésage 24 peut présenter un chanfrein d'entrée (non représenté). De préférence, l'alésage 24 doit être suffisamment long pour que, malgré la présence de ce chanfrein d'entrée, l'alésage 24 maintienne l'anneau 22 sans jeu, sur toute l'épaisseur de l'anneau suivant la direction axiale.

Par ailleurs, en position montée l'anneau 22 est bloqué contre l'épaulement 28, dans l'alésage 24. Il est donc bloqué en translation, du côté de l'épaulement 28, suivant l'axe X.

Le blocage de l'anneau 22 d'une part sur l'épaulement 25 du bloc-cylindres 14, et d'autre part sur les butées axiales 25 du tronçon d'arbre 12, permet à l'anneau en position montée d'empêcher un déplacement relatif suivant une direction axiale du tronçon d'arbre 12 par rapport au bloc-cylindres 14.

Ainsi dans le mode de réalisation illustré sur les figures 1A à 1C, l'ensemble de liaison présenté comporte des moyens de retenue 30 constitués par l'anneau 22 (demi-anneaux 22A et 22B), les cannelures 18 avec notamment leurs encoches 26, et l'alésage 24 délimité par l'épaulement 28.

Le procédé de montage de l'ensemble de liaison (figures 1A à 1C) comporte les étapes suivantes :
a) on place les deux demi-anneaux 22A et 22B sur le tronçon d'arbre en mettant en œuvre les moyens de retenue 30 de telle sorte que la première extrémité d'un premier desdits demi-anneaux et la première extrémité du deuxième desdits demi-anneaux ne puissent s'écarter l'une de l'autre suivant une direction circonférentielle.
b) on engage le bloc-cylindres 14 sur le tronçon d'arbre 12 de telle sorte que le tronçon d'arbre 12 soit disposé dans l'alésage 16 de la pièce d'accueil, l'anneau (22) étant interposé entre le tronçon d'arbre (12) et la pièce d'accueil (14), et que la pièce d'accueil maintienne l'anneau (22) radialement contre le tronçon d'arbre.

L'étape b) est généralement suivie par des étapes de montage ultérieures, au cours desquelles en particulier le blocage du bloc-cylindres sur le tronçon d'arbre peut être finalisé. En particulier, des moyens de blocage supplémentaires peuvent être mis en œuvre pour empêcher que le bloc-cylindres 14 ne se dégage du tronçon d'arbre 12 (en se déplaçant vers la gauche, sur la figure 1C).

Le procédé selon l'invention comprend donc deux grandes étapes :
Une étape a) de montage provisoire : Pendant l'étape a), l'anneau 22 est assemblé et fixé sur le tronçon d'arbre de manière provisoire. Durant cette phase, il suffit que l'anneau demeure en position sans tomber sur le tronçon d'arbre.
Une étape b) de montage définitif : Pendant l'étape b), grâce au fait que le bloc-cylindres (la pièce d'accueil) est mis en place autour du tronçon d'arbre et de l'anneau 22, et qu'ainsi il maintient radialement l'anneau contre le tronçon d'arbres, l'anneau 22 se trouve entièrement bloqué radialement, et est de plus bloqué au moins suivant une direction de translation à la fois par rapport au tronçon d'arbre 12 et par rapport au bloc-cylindres 14. Ainsi bloqué, il est à même d'assurer de manière durable sa fonction de blocage axial relatif du bloc-cylindres 14 par rapport au tronçon d'arbre 12.

La manière dont les moyens de retenue 30 sont mis en œuvre de telle sorte que les premières extrémités respectives des deux demi-anneaux ne puissent s'écarter l'une de l'autre suivant une direction circonférentielle va maintenant être explicitée, en relation avec différents modes de réalisation d'ensembles de liaison selon l'invention.

Dans ces différents exemples, le bloc-cylindres (ou plus généralement la pièce d'accueil) est similaire au bloc-cylindres 14 de la figure 1C et n'est pas représenté sur les figures.

De plus, dans ces différents exemples le tronçon d'arbre est constitué par la fusée de roue 12 présentée précédemment, comportant des cannelures 20.

Cependant tout en restant dans le cadre de l'invention, le tronçon d'arbre et/ou le bloc-cylindres peuvent naturellement avoir des formes différentes de celles présentées sur les figures 1A à 1C.

Par exemple, le tronçon d'arbre 12 peut comporter une gorge circonférentielle.

Dans ce cas, si au niveau (axialement) où doit être placé l'anneau, l'arbre a une surface extérieure globalement lisse, la gorge circonférentielle est aménagée en creux par rapport à cette surface. Les butées axiales au sens de l'invention sont alors formées par les bords de la gorge.

Inversement, si au niveau où doit être placé l'anneau, le tronçon d'arbre comporte des cannelures telles que les cannelures 20, la gorge circonférentielle peut être formée axialement au niveau d'encoches aménagées dans les cannelures, de manière analogue aux encoches 26 citées précédemment.

Dans ce cas dans le tronçon d'arbre, les butées axiales sont formées par les bords de la gorge et éventuellement par les extrémités des cannelures au niveau des encoches.

La figure 3 (en complément avec les figures 1A à 1C) présente un premier mode de réalisation d'un ensemble de liaison, mais qui ne correspond pas à l'invention revendiquée. Dans ce mode de réalisation, les moyens de retenue comportent un bracelet élastique 31. Celui-ci est monté autour des demi-anneaux 22A et 22B qu'il ceinture et maintient au contact du tronçon d'arbre 12.

Du fait du bracelet 31, les demi-anneaux sont maintenus en position montée. La figure 3 représente sous forme éclatée la fusée 12 et l'anneau 22 avec son bracelet 31.

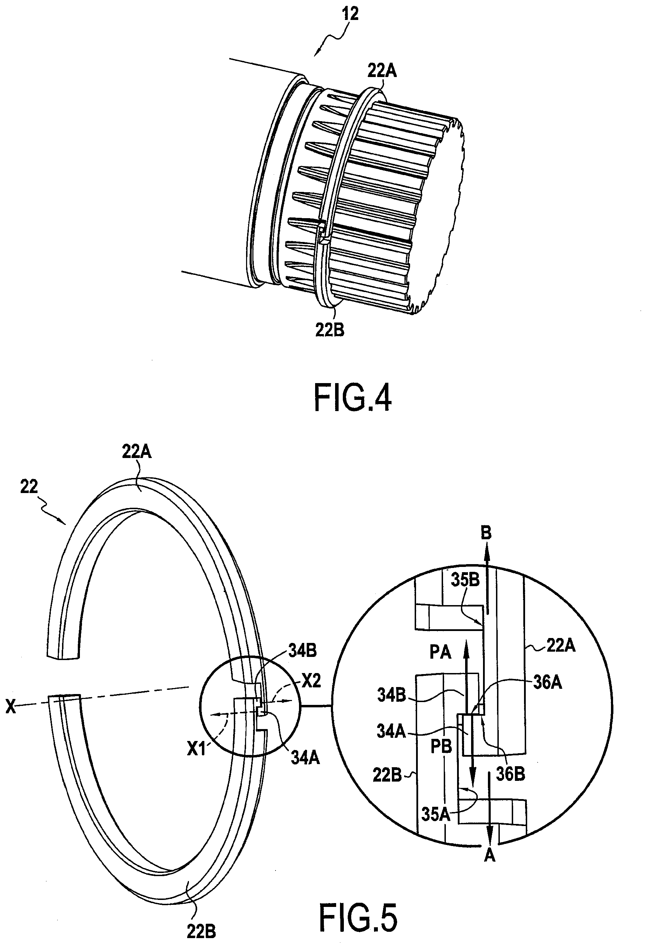

Les figures 4-5 et 6-7A présentent respectivement un deuxième et un troisième mode de réalisation, assez voisins l'un de l'autre, d'un ensemble de liaison. Le deuxième mode de réalisation correspond à l'invention revendiquée, mais non le troisième mode de réalisation.

Dans ces modes de réalisation, les moyens de retenue sont formés par deux crochets 34A et 34B, chacun étant formé de manière intégrale ou monobloc dans une extrémité (première extrémité) de l'un des demi-anneaux.

Les crochets 34A,34B sont réalisés en faisant une encoche 35A,35B aux extrémités des demi-anneaux 22A,22B. Les encoches 35A,35B constituent des creux au sens de la présente invention.

Chacun de ces crochets a la forme d'une partie coudée (notée également 34A,34B), qui s'étend à la première extrémité du demi-anneau dans une direction perpendiculaire à la direction circonférentielle (suivant les flèches X1, X2, sur la Fig.5).

Chacun de ces crochets ou parties coudées 34A,34B comporte une surface de retenue 36A,36B dont la perpendiculaire sortante PA, PB est dirigée vers l'arrière par rapport à la direction d'extrémité (flèches A, B, Fig.5) de la première extrémité du demi-anneau. Cette direction d'extrémité est la direction circonférentielle à la première extrémité du demi-anneau considéré, et plus particulièrement dans le sens sortant par rapport à cette première extrémité.

Sur la figure 5, les crochets 34A et 34B sont représentés engagés l'un avec l'autre. Les surfaces 36A et 36B se font alors face et leurs directions perpendiculaires respectives sont dirigées suivant la direction circonférentielle de l'anneau 22, parallèlement aux directions d'extrémités A et B des premières extrémités des anneaux, mais dans des sens opposés.

Par suite, même si un effort de séparation tend à séparer les premières extrémités des demi-anneaux 22A et 22B, les crochets 34A et 34B empêchent un tel mouvement.

La différence principale entre les deuxième et troisième mode de réalisation réside dans l'orientation des crochets 34A,34B.

Dans le deuxième mode de réalisation (Fig.4,5), les crochets 34A,34B s'étendent suivant la direction axiale, c'est-à-dire la direction parallèle à l'axe X de l'arbre (flèches X1, X2 parallèles à l'axe X, Fig.5).

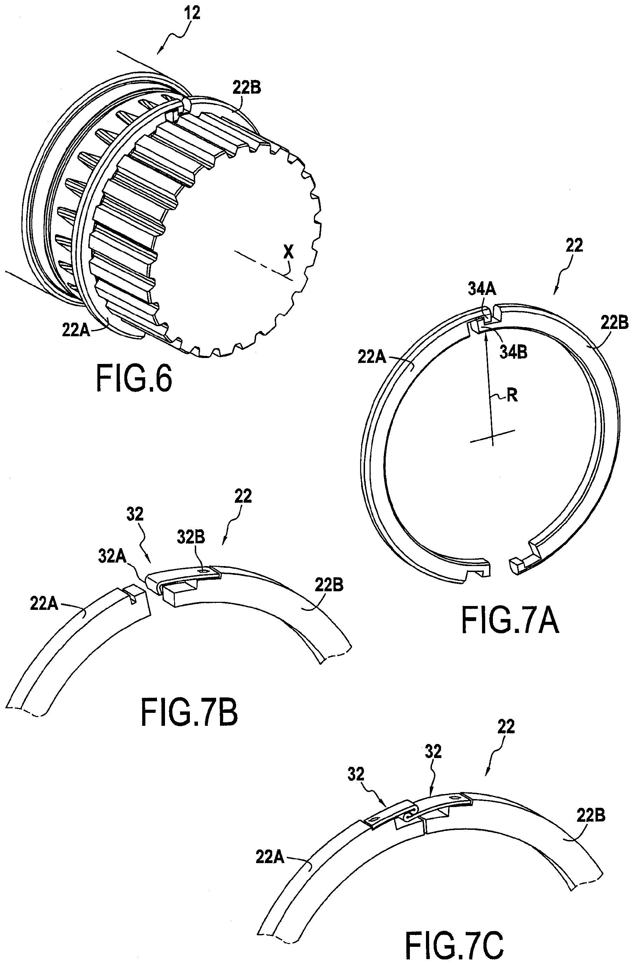

Par contraste dans le troisième mode de réalisation (Fig.6,7A), les crochets 34A,34B s'étendent suivant une direction radiale (direction radiale R, Fig.7A).

Par ailleurs, dans les deuxième et troisième modes de réalisation, les premières extrémités des demi-anneaux (faisant partie des moyens de retenue) sont agencées de telle sorte que pour déplacer ces premières extrémités depuis la position montée jusqu'à une position dans laquelle les premières extrémités peuvent s'écarter (suivant la direction circonférentielle), il est nécessaire de déplacer le crochet de l'un des demi-anneau dans la direction radiale en l'écartant du tronçon d'arbre 12.

Ce mouvement de dégagement radial dans le sens centrifuge est nécessaire car les butées axiales 25 empêchent le mouvement axial des premières extrémités des demi-anneaux 22A,22B (qui serait un mouvement parallèle à l'axe du tronçon d'arbre 12, suivant les flèches X1, X2 sur la Fig. 5).

Un mode préférentiel de mise en œuvre du procédé selon l'invention est illustré notamment par la figure 6.

Comme le montre cette figure, lors du montage des demi-anneaux 22A et 22B (étape a) du procédé), le tronçon d'arbre 12 est orienté horizontalement.

On place alors les demi-anneaux 22A,22B de part et d'autre du tronçon d'arbre, avec leurs premières extrémités disposées en haut, sur la méridienne supérieure du tronçon d'arbre.

Dans cette configuration, le poids des demi-anneaux les maintient en position stable en empêchant tout mouvement radial centrifuge de leurs premières extrémités qui pourrait leur permettre de se désengager l'une de l'autre.

Une autre différence entre le deuxième et le troisième mode de réalisation est que dans le deuxième mode de réalisation, les deuxièmes extrémités des demi-anneaux (c'est-à-dire les extrémités opposées aux premières extrémités) sont libres ; aucun moyen de retenue n'est prévu pour éviter qu'elles ne s'écartent l'une de l'autre.

Inversement dans le troisième mode de réalisation (Fig.7A), les deuxièmes extrémités sont agencées de manière identique aux premières extrémités. Ainsi avantageusement, les deux demi-anneaux 22A et 22B sont identiques. Ce mode de réalisation suppose une certaine souplesse des demi-anneaux afin de permettre leur mise en place.

Or, comme cela a été indiqué, il est préférable pour les applications dans lesquelles l'anneau transmet des efforts axiaux très importants (par exemple lorsque la pièce d'accueil est un bloc-cylindres de moteur hydraulique), que les demi-anneaux soient constitués dans un matériau très rigide.

Les variantes de réalisation illustrées par les figures 7B et 7C montrent deux possibilités d'agencement des moyens de retenue selon l'invention, lorsque les demi-anneaux sont assez rigides.

Dans la première variante (Fig.7B), les moyens de retenue comportent une pièce de retenue 32 fixée rigidement au demi-anneau 22B. Cette pièce de retenue 32 est une petite lame de tôle élastique. La première extrémité 32B de cette lame est fixée à l'extrémité du demi-anneau 22B par soudure. La deuxième extrémité est courbée et présente une partie coudée 32A qui s'étend suivant une direction radiale rentrante. La première extrémité du demi-anneau 22A quant à elle présente une fente 33. La fente est agencée de telle sorte que la partie coudée 32A de la pièce de retenue 32 peut s'insérer dans la fente 33. Dans cette position, la pièce de retenue 32 empêche que les premières extrémités des demi-anneaux 22A et 22B ne s'écartent l'une de l'autre.

Des moyens d'aide à l'engagement, comme un petit chanfrein dans le sens du montage peuvent être prévus. La longueur de lame doit être suffisante pour permettre une flexion avec un effort permettant le montage souhaité, par exemple manuellement et sans outil spécial. La lame élastique peut par exemple être soudée à l'extérieur de l'anneau 22, auquel cas le diamètre de l'alésage 24 de la pièce d'accueil sera choisi pour correspondre au diamètre extérieur de l'anneau à l'endroit des lames.

De manière alternative, l'alésage 24 peut retenir les demi-anneaux 22 à l'endroit des lames ; ou encore, des amincissements peuvent être prévus sur les demi-anneaux 22a et 22B pour loger l'épaisseur de la lame, et l'alésage 24 de la pièce d'accueil peut maintenir les demi-anneaux en position sur toute leur périphérie.

Le fait d'utiliser une petite lame de tôle plutôt que de prévoir un amincissement dans la matière des demi-anneaux 22A ou 22B permet d'obtenir facilement une pièce très fine et d'obtenir la flexibilité souhaitée. En particulier, la nuance d'acier, l'épaisseur, la largeur et la longueur de la lame sont choisies de manière à obtenir la flexibilité qui convient.

Dans la seconde variante (Fig.7C), les moyens de retenue comportent deux pièces de retenue 32 fixées rigidement respectivement à chacun des demi-anneaux 22A et 22B. Ces pièces de retenue sont similaires à la pièce de retenue 32 de la première variante. Chacune est également une petite lame de tôle élastique. Les extrémités libres de ces pièces de retenue présentent chacune une partie coudée. Ces parties coudées sont courbées : l'une radialement vers l'extérieur (par rapport à l'axe X) et l'autre radialement vers l'intérieur. Grâce à cela, lorsque les deux demi-anneaux 22A et 22B sont positionnés l'un par rapport à l'autre sur le tronçon d'arbre (étape a) du procédé), ces parties coudées s'engagent l'une avec l'autre et se retiennent mutuellement ; par suite, une fois les demi-anneaux placés en position d'engagement, les pièces de retenue 32 empêchent que les premières extrémités des demi-anneaux 22A et 22B ne s'écartent l'une de l'autre.

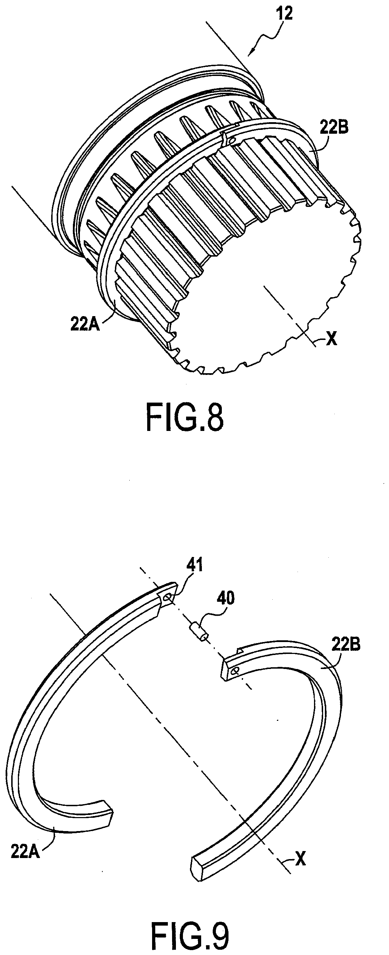

Les figures 8-9 et 10-11 présentent respectivement un quatrième et un cinquième mode de réalisation, assez voisins l'un de l'autre, d'un ensemble de liaison. Le quatrième mode de réalisation correspond à l'invention revendiquée, mais non le cinquième mode de réalisation.

Dans ces modes de réalisation, les moyens de retenue comportent une pièce de retenue 40. Cette pièce 40 est distincte à la fois du tronçon d'arbre et des demi-anneaux.

Dans les modes de réalisation présentés, elle présente la forme d'une goupille cylindrique 40, mais d'autres formes sont envisageables.

La goupille 40 constitue un organe de cisaillement qui permet de solidariser l'une à l'autre les premières extrémités des demi-anneaux.

Les premières extrémités des demi-anneaux 22A,22B sont agencées de la manière suivante.

Une surface plane est aménagée à la première extrémité de chacun de ces demi-anneaux. Les deux surfaces planes ainsi aménagées sont agencées de manière à être en contact l'une avec l'autre lorsque les demi-anneaux sont en position montée, et de telle sorte que dans cette position, leur perpendiculaire commune soit perpendiculaire à la direction circonférentielle des demi-anneaux.

Un alésage 41 (constituant un creux au sens de l'invention) est percé dans chacune de ces surfaces suivant la direction perpendiculaire à celles-ci. Ces alésages sont placés de manière à être face à face en position montée des demi-anneaux et à permettre l'insertion de la goupille 40.

Une fois montée dans l'alésage 41, la goupille 40 fixe l'une à l'autre les premières extrémités des deux demi-anneaux et les empêche ainsi de s'écarter.

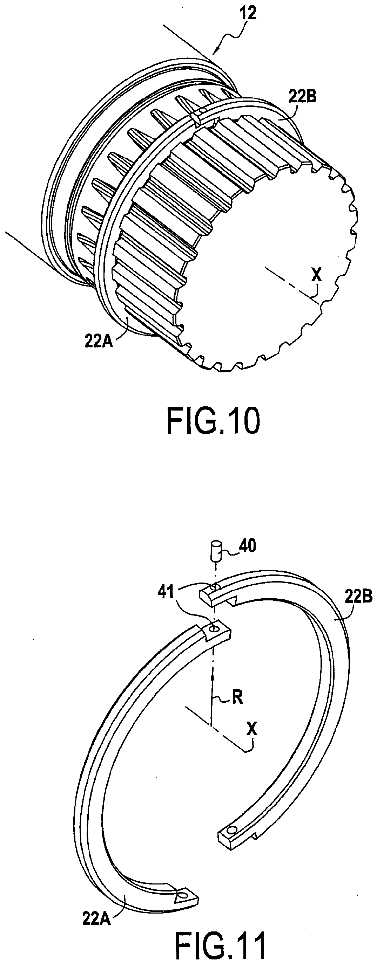

La différence principale entre les quatrième et cinquième mode de réalisation réside dans l'orientation de la goupille 40 (et donc l'agencement correspondant des premières extrémités des demi-anneaux) : Dans le quatrième mode de réalisation (Fig.8,9), la goupille s'étend suivant une direction parallèle à l'axe X de l'arbre (Fig.9) ; dans le cinquième mode de réalisation (Fig.10,11), elle s'étend suivant la direction radiale R.

Par ailleurs, dans le quatrième mode de réalisation, les deuxièmes extrémités des demi-anneaux sont libres ; inversement dans le cinquième mode de réalisation, les deuxièmes extrémités sont agencées de manière identique aux premières extrémités, et les deux demi-anneaux 22A et 22B sont identiques.

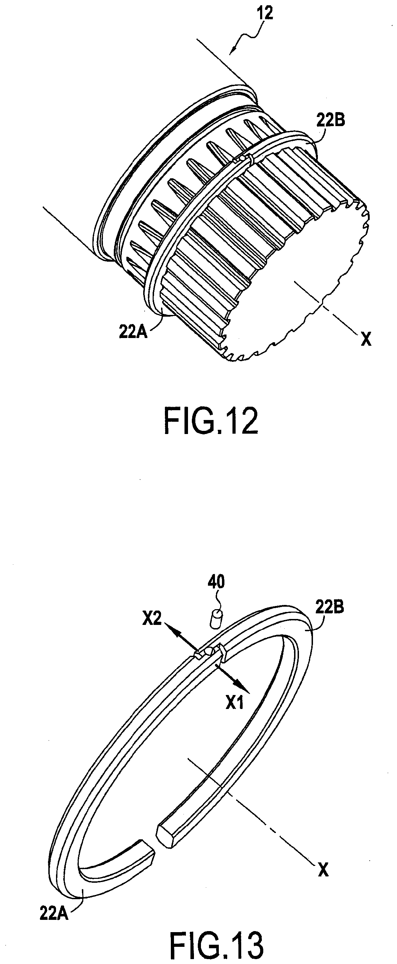

Les figures 12 et 13 illustrent un sixième mode de réalisation.

Dans ce mode de réalisation, les moyens de retenue comportent également une pièce de retenue 40, distincte du tronçon d'arbre et des demi-anneaux, et ayant la forme d'un barreau cylindrique.

Comme dans les quatrième et cinquième modes de réalisation, des surfaces planes sont aménagées respectivement à la première extrémité de chacun des demi-anneaux 22A,22B. Elles sont agencées de telle sorte que lorsque les demi-anneaux sont en position montée, elles sont en contact l'une avec l'autre, et leur perpendiculaire commune est perpendiculaire à la direction circonférentielle à la première extrémité des demi-anneaux.

Une rainure semi-cylindrique (constituant un creux au sens de l'invention) est aménagée dans chacune de ces surfaces suivant la direction radiale. Les deux rainures ainsi prévues sont placées de manière à être face à face en position montée des demi-anneaux, et à pouvoir accueillir le barreau 40.

En position montée, les demi-anneaux sont placés dans les encoches 26 des cannelures 20, entre les butées axiales 25.

Les butées axiales 25 empêchent un écartement axial des premières extrémités des demi-anneaux suivant la direction axiale (flèches X1 et X2, Fig.13). Par conséquent dans cette position de l'anneau, les deux surfaces planes des demi-anneaux 22A,22B restent en contact l'une avec l'autre.

Le barreau 40 reste donc au contact à la fois de la rainure formée dans le demi-anneau 22A, et de la rainure formée dans le demi-anneau 22B. Il empêche ainsi les premières extrémités des demi-anneaux de s'écarter l'une de l'autre suivant la direction circonférentielle.

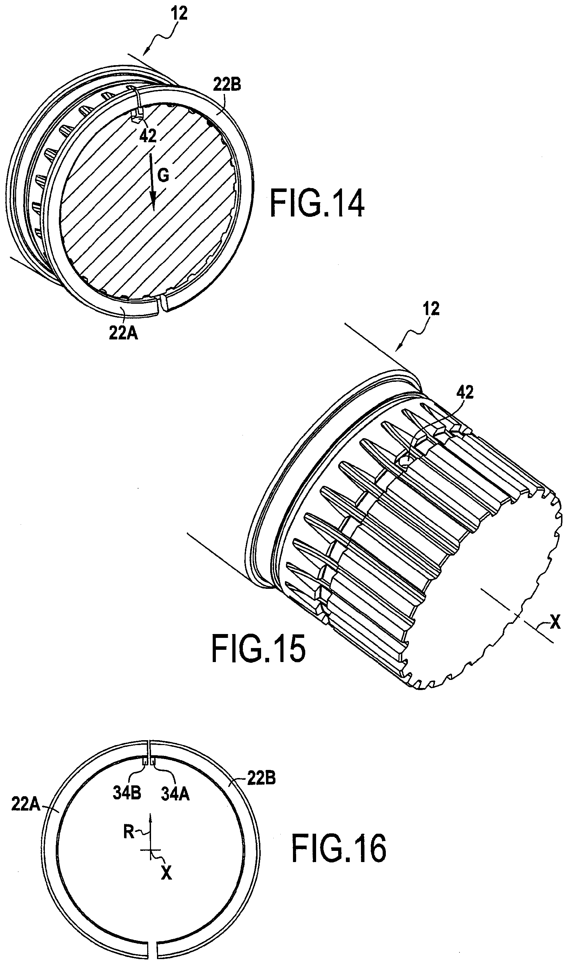

Les figures 14-16 et 17-18 présentent respectivement un septième et un huitième mode de réalisation, assez voisins l'un de l'autre, d'un ensemble de liaison selon l'invention.

Dans ces modes de réalisation, les moyens de retenue comportent deux crochets 34A et 34B, chacun présentant une partie coudée (également 34A,34B) intégrée à la première extrémité de chacun des demi-anneaux et s'étendant dans une direction perpendiculaire à la direction circonférentielle.

Dans le septième mode de réalisation, cette direction est la direction radiale (R), alors que dans le huitième mode de réalisation, cette direction est la direction axiale (X) du tronçon d'arbre.

Dans ces deux modes de réalisation, les premières extrémités des demi-anneaux sont empêchées de s'écarter l'une de l'autre par une pièce de retenue, à savoir en l'occurrence, le tronçon d'arbre 12 lui-même.

Dans ce but, dans le septième mode de réalisation, le tronçon d'arbre présente un trou radial 42 (Fig.14,15), prévu pour recevoir les crochets 34A,34B.

Dans ce mode de réalisation, le trou radial 42 est de préférence placé sensiblement vers le haut de la fusée de roue 12 lors du montage du bloc-cylindres sur la fusée 12. Sur la figure 15, la force de gravité s'exerce donc suivant la flèche G. Les demi-anneaux 22A et 22B représentés sur la figure 16 sont mis en place sur la fusée de roue 12 de telle sorte que les crochets 24A et 34B s'engagent dans le trou 42 situé en haut de la fusée 12. La force de gravité s'exerçant sur les demi-anneaux suivant la direction verticale s'exerce sur le barycentre de chaque demi-anneau ; comme les demi-anneaux sont astreints par leurs crochets 24A et 24B à pivoter sensiblement autour du trou 42, cette force crée donc un couple de rappel qui tend à empêcher l'écartement des demi-anneaux et à les maintenir dans la position de montage souhaitée. Avantageusement, ce montage ne nécessite aucun coincement des pièces, et permet donc une mise en place manuelle ou robotisée très facile.

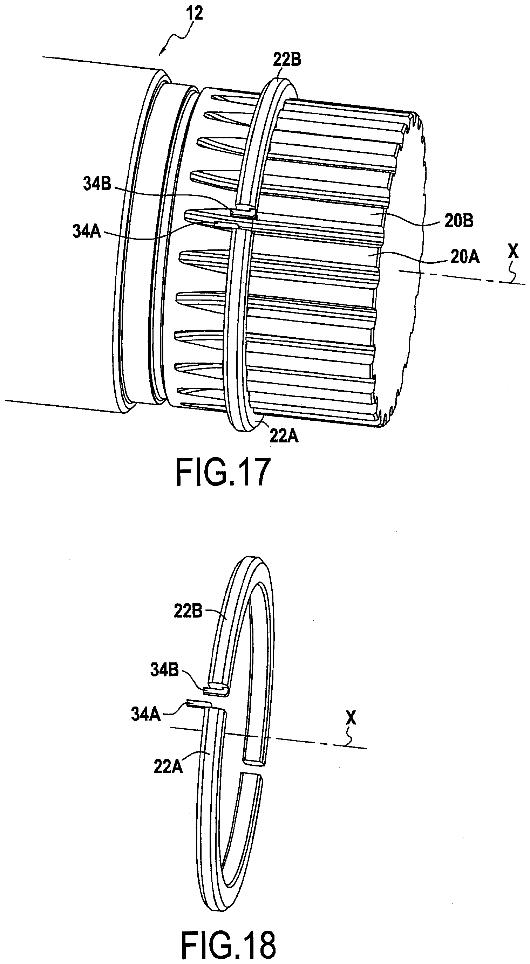

Dans le huitième mode de réalisation (Fig.17,18) au contraire, les crochets 34A,34B sont formés suivant la direction axiale et engagés entre deux nervures 20B,20A des cannelures 20 du tronçon d'arbre 12. Les parois latérales des nervures 20B,20A constituent des surfaces de blocage qui empêchent les premières extrémités des demi-anneaux de s'écarter l'une de l'autre.

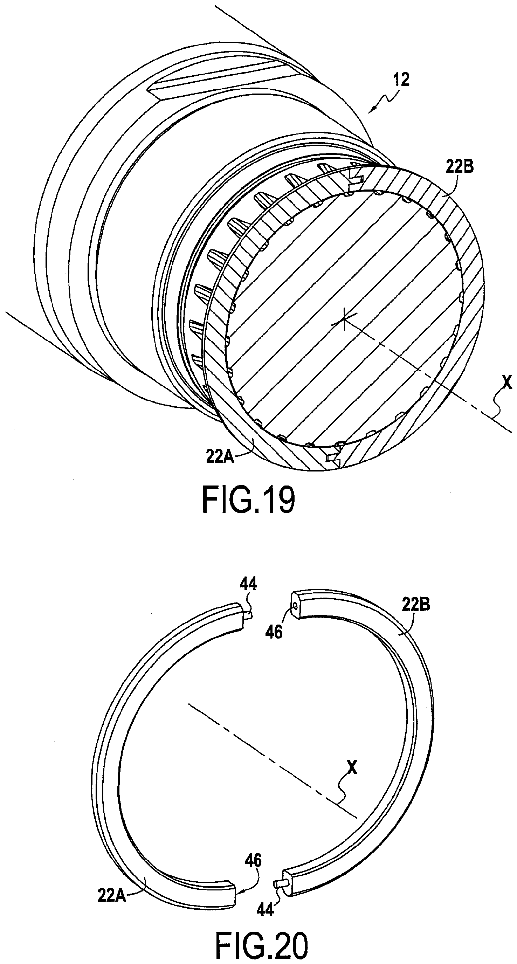

Les figures 19 et 20 présentent enfin un neuvième mode de réalisation d'un ensemble de liaison, mais qui ne correspond pas à l'invention revendiquée.

Dans ce mode de réalisation, la première extrémité d'un premier des demi-anneaux comporte une tige cylindrique 44 qui s'étend suivant la direction circonférentielle dans le prolongement du corps du demi-anneau ; la première extrémité du deuxième demi-anneau comporte inversement un alésage cylindrique 46 qui s'étend, également suivant la direction circonférentielle, à l'intérieur du corps du demi-anneau.

La tige 44 a un diamètre extérieur très légèrement supérieur, voire égal (voire même légèrement inférieur), au diamètre intérieur de l'alésage 46. Aussi, lorsque l'on engage la tige 44 dans l'alésage 46, un certain frottement se produit entre la tige 44 et l'alésage 46.

Du fait de ce frottement, la tige 44 est empêchée de sortir de l'alésage 46. Par suite, les deux extrémités des demi-anneaux 22A,22B sont empêchées de s'écarter l'une de l'autre. Bien que la résistance à l'écartement ne soit pas considérable, elle est suffisante pour permettre, de manière simple, de réaliser le montage des demi-anneaux puis le montage du bloc-cylindres sur le tronçon d'arbre 12, les deux demi-anneaux restant en position montée sur le tronçon d'arbre.

On notera enfin que les moyens de retenue n'ont généralement à remplir leur fonction (empêcher les premières extrémités des deux demi-anneaux de s'écarter l'une de l'autre) qu'au moment du montage des demi-anneaux, et jusqu'à ce qu'ils soient coiffés ou recouverts (au moins en partie) par la pièce d'accueil. Aussi, bien qu'ils puissent être formés en matériau rigide (comme par exemple dans le premier mode de réalisation, Fig.2), ils peuvent également être réalisés au moins partiellement en matériau souple, et ainsi mis en forme seulement juste avant le montage. Cela peut par exemple être le cas des crochets 34A,34B des septième et huitième mode de réalisation, qui peuvent être en matériau déformable à la main.

Le maintien en position des demi-anneaux par les moyens de retenue est réalisé de manière provisoire pendant la première étape a) du montage. Pendant cette phase, l'action de retenue assurée par les moyens de retenue peut être relativement faible, c'est-à-dire tout juste suffisante pour empêcher les anneaux de tomber sous l'effet de leur propre poids.

Inversement, une fois la pièce d'accueil montée, le maintien en position définitive des demi anneaux, permettant à ceux-ci d'assurer leur fonction de maintien axial de la pièce d'accueil sur la machine ou le véhicule, est sécurisé par le recouvrement axial externe des demi-anneaux par la pièce d'accueil. Ainsi, lorsque la pièce d'accueil est fixée sur l'arbre, les demi-anneaux ne peuvent s'échapper.

Aussi dans l'ensemble de liaison suivant l'invention, les moyens de retenue peuvent donc être considérés comme de premiers moyens de retenue, utilisés dans un premier temps à titre provisoire pour permettre le maintien des deux demi-anneaux dans la position de montage souhaitée ; et l'ensemble de liaison est complété par de deuxièmes moyens de retenue qui sont réalisés par le recouvrement axial des demi anneaux par la pièce d'accueil afin de maintenir radialement les demi-anneaux contre le tronçon d'arbre.

L'ensemble de liaison suivant l'invention est particulièrement intéressant pour équiper les fusées de roues de machines, de véhicules ou de remorques qui utilisent des moteur hydrauliques. Il est particulièrement avantageux pour équiper les fusées de roues de ces engins avec des moteurs d'assistance hydrauliques, plus particulièrement au cas particulier des moteurs à came multilobes, à came tournante reliée à un moyeu et à bloc-cylindres fixe porté par la fusée de roue.

L'ensemble de liaison selon l'invention facilite l'entretien des moteurs hydrauliques portées par des fusées de roue en position horizontale, en permettant un montage ou un démontage rapide de l'anneau d'arrêt. Il s'applique avantageusement aux machines et véhicules équipés d'assistance à la traction temporaire à moteurs à came débrayables ou décrabotables par rétractation des pistons ou par débrayage du bloc cylindre de l'arbre. Il s'applique avantageusement aux fusées de roue directrices de telles machines ou véhicules.

Enfin, cet ensemble de liaison s'applique avantageusement au montage de moteurs hydrauliques sur des essieux de machines ou de véhicules semi-finis en position horizontale.

## Revendications

1. Ensemble de liaison comprenant une pièce d'accueil (14), un anneau d'arrêt (22), et un tronçon d'arbre (12) présentant une pluralité de butées axiales (25) aptes à empêcher un déplacement axial de l'anneau lorsque celui-ci est disposé autour dudit tronçon ;
la pièce d'accueil (14) présentant un alésage (16) pour recevoir le tronçon d'arbre ;
l'anneau étant constitué principalement par deux demi-anneaux (22A,22B) déplaçables l'un par rapport à l'autre, chaque demi-anneau présentant une première extrémité et une deuxième extrémité ;
l'ensemble comportant des moyens de retenue (34A,34B) aptes, lorsque l'anneau est placé dans une position montée autour dudit tronçon et retenu axialement par lesdites butées axiales (25), à empêcher la première extrémité d'un premier desdits demi-anneaux et la première extrémité du deuxième desdits demi-anneaux de s'écarter l'une de l'autre suivant une direction circonférentielle ;
l'anneau empêchant en position montée un déplacement relatif suivant une direction axiale (X) du tronçon d'arbre (12) par rapport à la pièce d'accueil (14) ;
l'ensemble de liaison étant agencé de telle sorte qu'en position montée, l'anneau (22) est interposé entre le tronçon d'arbre (12) et la pièce d'accueil (14) et est maintenu radialement contre le tronçon d'arbre (12) par la pièce d'accueil (14) ;
l'ensemble de liaison **se caractérisant en ce que** les moyens de retenue sont agencés pour le maintien des premières extrémités des demi-anneaux, tandis que les deuxièmes extrémités sont libres.

2. Ensemble de liaison selon la revendication 1, dans lequel la pièce d'accueil est un bloc-cylindres (14) de moteur hydraulique, notamment un moteur hydraulique à pistons radiaux.

3. Ensemble de liaison selon la revendication 1 ou 2, dans lequel le tronçon d'arbre (12) est un tronçon d'arbre de sortie de moteur et/ou une fusée de roue.

4. Ensemble de liaison selon l'une quelconque des revendications 1 à 3, dont les premières extrémités comportent une partie coudée (34A,34B) qui s'étend suivant une direction radiale (R).

5. Ensemble de liaison selon l'une quelconque des revendications 1 à 3, dont les premières extrémités comportent une partie coudée (34A,34B) qui s'étend suivant une direction parallèle à un axe (X) de l'arbre.

6. Ensemble de liaison selon l'une quelconque des revendications 1 à 5, dans lequel les moyens de retenue comportent une pièce de retenue (32) fixée rigidement à l'un des demi-anneaux (22A,22B).

7. Ensemble de liaison selon l'une quelconque des revendications 1 à 5, dont les moyens de retenue sont constitués d'une part par une partie intégrale d'un premier desdits demi-anneaux, et d'autre part par une partie intégrale de l'autre desdits demi-anneaux.

8. Ensemble de liaison selon l'une quelconque des revendications 1 à 7, dont les moyens de retenue sont agencés de telle sorte que tout déplacement relatif desdites premières extrémités depuis la position montée jusqu'à une position dans laquelle l'écartement desdites premières extrémités suivant la direction circonférentielle est possible comporte un déplacement radial d'au moins une des premières extrémités.

9. Ensemble de liaison selon l'une quelconque des revendications 1 à 8, dont la première extrémité de chacun des demi-anneaux comporte une surface de retenue (36A,36B) dont la perpendiculaire sortante est dirigée vers l'arrière par rapport à la direction (A,B) de la première extrémité du demi-anneau ; les surfaces de retenue des deux demi-anneaux sont agencées de manière à pouvoir être placées dans une position d'engagement l'une avec l'autre, dans laquelle elles sont engagées directement l'une avec l'autre de manière à empêcher lesdites premières extrémités de s'écarter l'une de l'autre suivant une direction circonférentielle, ou bien à les maintenir à une distance constante l'une de l'autre, lorsque l'anneau est en position montée.

10. Ensemble de liaison selon l'une quelconque des revendications 1 à 9, dont au moins l'un des demi-anneaux comporte un creux (35A,35B;41;42) suivant une direction sensiblement perpendiculaire à la direction circonférentielle ;
les moyens de retenue comportent au moins une saillie apte à être placée dans ledit creux, et
la saillie est solidaire de l'autre demi-anneau quant aux déplacements suivant la direction circonférentielle.

11. Ensemble de liaison selon l'une quelconque des revendications 1 à 10, dont les moyens de retenue comportent une pièce de retenue (40,12) déplaçable par rapport aux demi-anneaux ; et la pièce de retenue est apte à être placée au contact des surfaces de retenue de manière à transmettre un effort s'exerçant entre celles-ci et par suite à empêcher l'écartement desdites premières extrémités l'une par rapport à l'autre.

12. Ensemble de liaison selon la revendication 11, dont la pièce de retenue est le tronçon d'arbre (12).

13. Procédé de montage d'un ensemble de liaison selon l'une quelconque des revendications 1 à 12, comprenant les étapes suivantes :
a) on place les deux demi-anneaux sur le tronçon d'arbre, en mettant en œuvre les moyens de retenue de telle sorte que la première extrémité d'un premier desdits demi-anneaux et la première extrémité du deuxième desdits demi-anneaux ne puissent s'écarter l'une de l'autre suivant une direction circonférentielle, les deuxièmes extrémités desdits demi-anneaux restant libres ;
b) on engage la pièce d'accueil (14) sur le tronçon d'arbre de telle sorte que le tronçon d'arbre soit disposé dans l'alésage (16) de la pièce d'accueil, l'anneau (22) étant interposé entre le tronçon d'arbre (12) et la pièce d'accueil (14), et que la pièce d'accueil maintienne l'anneau (22) radialement contre le tronçon d'arbre.

14. Procédé de montage selon la revendication 13, dans lequel le tronçon d'arbre est orienté horizontalement durant les étapes a) à c).

15. Procédé de montage selon la revendication 13 ou 14, dans lequel à l'étape a) les premières extrémités des demi-anneaux sont disposées sur la méridienne supérieure du tronçon d'arbre.

## Patentansprüche

1. Verbindungsanordnung, umfassend ein Aufnahmestück (14), einen Sperrring (22) und einen Wellenabschnitt (12) mit einer Vielzahl von axialen Anschlägen (25), die dafür geeignet sind, um eine axiale Verschiebung des Rings zu verhindern, wenn dieser um den genannten Abschnitt angeordnet ist,
wobei das Aufnahmestück (14) eine Bohrung (16) aufweist, um den Wellenabschnitt aufzunehmen,
wobei der Ring im Wesentlichen aus zwei Halbringen (22A, 22B) besteht, die in Bezug aufeinander verschiebbar sind, wobei jeder Halbring ein erstes Ende und ein zweites Ende aufweist,
wobei die Anordnung Haltemittel (34A, 34B) aufweist, die dafür geeignet sind, wenn der Ring in eine Position platziert wird, in der er um den genannten Abschnitt montiert ist und axial von den axialen Anschlägen (25) gehalten ist, zu verhindern, dass sich das erste Ende eines ersten der genannten Halbringe und das erste Ende des zweiten der genannten Halbringe voneinander in einer Umfangsrichtung beabstanden,
wobei der Ring in der montierten Position eine relative Verschiebung in einer axialen Richtung (X) des Wellenabschnitts (12) in Bezug auf das Aufnahmestück (14) verhindert,
wobei die Verbindungsanordnung derart eingerichtet ist, dass in der montierten Position der Ring (22) zwischen dem Wellenabschnitt (12) und dem Aufnahmestück (14) angeordnet ist und radial gegen den Wellenabschnitt (12) durch das Aufnahmestück (14) gehalten wird,
wobei die Verbindungsanordnung **dadurch gekennzeichnet ist, dass** die Haltemittel eingerichtet sind, um die ersten Enden der Halbringe zu halten, während die zweiten Enden frei sind.

2. Verbindungsanordnung nach Anspruch 1, wobei das Aufnahmestück ein Zylinderblock (14) eines Hydraulikmotors ist, insbesondere eines Hydraulikmotors mit radialen Kolben.

3. Verbindungsanordnung nach Anspruch 1 oder 2, wobei der Wellenabschnitt (12) ein Wellenabschnitt eines Motorabgangs und/oder eines Achsschenkels ist.

4. Verbindungsanordnung nach einem der Ansprüche 1 bis 3, wobei die ersten Enden einen gebogenen Abschnitt (34A, 34B) umfassen, der sich in einer radialen Richtung (R) erstreckt.

5. Verbindungsanordnung nach einem der Ansprüche 1 bis 3, wobei die ersten Enden einen gebogenen Abschnitt (34A, 34B) umfassen, der sich in einer Richtung parallel zu einer Achse (X) der Welle erstreckt.

6. Verbindungsanordnung nach einem der Ansprüche 1 bis 5, wobei die Haltemittel ein Haltestück (32) umfassen, das starr an einem der Halbringe (22A, 22B) befestigt ist.

7. Verbindungsanordnung nach einem der Ansprüche 1 bis 5, wobei die Haltemittel einerseits aus einem integralen Teil eines der genannten ersten Halbringe und andererseits aus einem integralen Teil des anderen der genannten Halbringe bestehen.

8. Verbindungsanordnung nach einem der Ansprüche 1 bis 7, wobei die Haltemittel derart eingerichtet sind, dass jede relative Verschiebung der genannten ersten Enden aus der montierten Position in eine Position, in der die Beabstandung der genannten ersten Enden in der Umfangsrichtung möglich ist, eine radiale Verschiebung mindestens eines der ersten Enden umfasst.

9. Verbindungsanordnung nach einem der Ansprüche 1 bis 8, wobei das erste Ende jedes der Halbringe eine Haltefläche (36A, 36B) umfasst, deren austretende Senkrechte nach hinten in Bezug auf die Richtung (A, B) des ersten Endes des Halbrings gerichtet ist, wobei die Halteflächen der beiden Halbringe eingerichtet sind, um in eine Eingriffsposition miteinander versetzt werden zu können, in der sie direkt miteinander in Eingriff stehen, um zu verhindern, dass sich die genannten ersten Enden voneinander in einer Umfangsrichtung beabstanden, oder auch um sie in einer konstanten Distanz voneinander zu halten, wenn sich der Ring in der montierten Position befindet.

10. Verbindungsanordnung nach einem der Ansprüche 1 bis 9, wobei mindestens einer der Halbringe einen Hohlraum (35A, 35B; 41; 42) in einer Richtung im Wesentlichen rechtwinklig zur Umfangsrichtung umfasst,
wobei die Haltemittel mindestens einen Vorsprung umfassen, der dafür geeignet ist, um in den genannten Hohlraum platziert zu werden, und
der Vorsprung mit dem anderen Halbring hinsichtlich der Verschiebungen in der Umfangsrichtung fest verbunden ist.

11. Verbindungsanordnung nach einem der Ansprüche 1 bis 10, wobei die Haltemittel ein Haltestück (40, 12) umfassen, das in Bezug auf die Halbringe verschiebbar ist, und wobei das Haltestück dafür geeignet ist, um derart in Kontakt mit den Halteflächen gebracht zu werden, dass eine Kraft übertragen wird, die zwischen ihnen ausgeübt wird, und um folglich die Beabstandung der genannten ersten Enden in Bezug aufeinander zu verhindern.

12. Verbindungsanordnung nach Anspruch 11, wobei das Haltestück der Wellenabschnitt (12) ist.

13. Verfahren zum Montieren einer Verbindungsanordnung gemäß einem der Ansprüche 1 bis 12, umfassend die folgenden Schritte:
a) die beiden Halbringe werden auf den Wellenabschnitt platziert, indem die Haltemittel derart verwendet werden, dass sich das erste Ende eines ersten der genannten Halbringe und das erste Ende des zweiten der genannten Halteringe nicht in Umfangsrichtung voneinander beabstanden können, wobei die zweiten Enden der genannten Halbringe frei bleiben,
b) das Aufnahmestück (14) wird auf dem Wellenabschnitt derart in Eingriff gebracht, dass der Wellenabschnitt in der Bohrung (16) des Aufnahmestücks angeordnet wird, wobei der Ring (22) zwischen dem Wellenabschnitt (12) und dem Aufnahmestück (14) angeordnet wird, und dass das Aufnahmestück den Ring (22) radial gegen den Wellenabschnitt hält.

14. Montageverfahren nach Anspruch 13, wobei der Wellenabschnitt während der Schritte a) bis c) horizontal angeordnet wird.

15. Montageverfahren nach Anspruch 13 oder 14, wobei in Schritt a) die ersten Enden der Halbringe am oberen Meridian des Wellenabschnitts angeordnet sind.

## Claims

1. A connection assembly comprising an accommodation part (14), a stopper ring (22), and a shaft section (12) having a plurality of axial abutments (25) able to prevent axial displacement of the ring when the latter is disposed around said section;
the accommodation part (14) having a bore (16) to receive the shaft section;
the ring consisting mainly of two half-rings (22A, 22B) movable relative to each other, each half-ring having a first end and a second end;
the assembly including retaining means (34A, 34B) able, when the ring is placed in a mounted position around said section and retained axially by said axial abutments (25), to prevent the first end of a first of said half-rings and the first end of the second of said half-rings from moving apart from each other along a circumferential direction;
the ring preventing in the mounted position a relative displacement along an axial direction (X) of the shaft section (12) relative to the accommodation part (14);
the connection assembly being arranged such that in the mounted position, the ring (22) is interposed between the shaft section (12) and the accommodation part (14) and is held radially against the shaft section (12) by the accommodation part (14);
the connection assembly being **characterized in that** the retaining means are arranged to hold the first ends of the half rings, while the second ends are free.

2. The connection assembly according to claim 1, wherein the accommodation part is a hydraulic motor cylinder block (14), in particular a radial-piston hydraulic motor.

3. The connection assembly according to claim 1 or 2, wherein the shaft section (12) is a motor output shaft section and/or a wheel spindle.

4. The connection assembly according to any one of claims 1 to 3, whose first ends include a bent portion (34A, 34B) which extends along a radial direction (R).

5. The connection assembly according to any one of claims 1 to 3, whose first ends include a bent portion (34A, 34B) which extends along a direction parallel to an axis (X) of the shaft.

6. The connection assembly according to any one of claims 1 to 5, wherein the retaining means include a retaining part (32) rigidly fixed to one of the half-rings (22A, 22B).

7. The connection assembly according to any one of claims 1 to 5, whose retaining means consist on the one hand of an integral portion of a first of said half-rings, and on the other hand of an integral portion of the other of said half-rings.

8. The connection assembly according to any one of claims 1 to 7, whose retaining means are arranged such that any relative displacement of said first ends from the mounted position to a position in which the spacing of said first ends along the circumferential direction is possible includes a radial displacement of at least one of the first ends.

9. The connection assembly according to any one of claims 1 to 8, whose first end of each of the half-rings includes a retaining surface (36A, 36B) whose outward perpendicular is directed rearwardly relative to the direction (A, B) of the first end of the half-ring; the retaining surfaces of the two half-rings are arranged so as to be able to be placed in a position of engagement with each other, in which they are directly engaged with each other so as to prevent said first ends from moving apart from each other along a circumferential direction, or to keep them at a constant distance from each other, when the ring is in the mounted position.

10. The connection assembly according to any one of claims 1 to 9, whose at least one of the half-rings includes a hollow (35A, 35B; 41; 42) along a direction substantially perpendicular to the circumferential direction;
the retaining means include at least one protrusion able to be placed in said hollow, and
the protrusion is secured to the other half-ring regarding the displacements along the circumferential direction.

11. The connection assembly according to any one of claims 1 to 10, whose retaining means include a retaining part (40, 12) movable relative to the half-rings; and the retaining part is able to be placed in contact with the retaining surfaces so as to transmit a force exerted therebetween and consequently to prevent the spacing of said first ends from each other.

12. The connection assembly according to claim 11, whose retaining part is the shaft section (12).

13. A method for mounting a connection assembly according to any one of claims 1 to 12, comprising the following steps:
a) placing the two half-rings on the shaft section, by implementing the retaining means so that the first end of a first of said half-rings and the first end of the second of said half-rings cannot move apart from each other along a circumferential direction, the second ends of said half-rings remaining free;
b) engaging the accommodation part (14) on the shaft section so that the shaft section is disposed in the bore (16) of the accommodation part, the ring (22) being interposed between the shaft section (12) and the accommodation part (14), and that the accommodation part holds the ring (22) radially against the shaft section.

14. The mounting method according to claim 13, wherein the shaft section is oriented horizontally during steps a) to c).

15. The mounting method according to claim 13 or 14, wherein in step a) the first ends of the half-rings are disposed on the upper meridian of the shaft section.
